# EUROPEAN PATENT SPECIFICATION

(11) **EP 1 791 655 B1**
(45) Date of publication and mention of the grant of the patent: **03.02.2016**
(21) Application number: 05749890.9
(22) Date of filing: 07.06.2005
(51) Int. Cl.: B05D 7/22, G06K 19/073

(54) **SMART IDENTIFICATION DOCUMENT**
KENNKARTE MIT CHIP
PIECE D'IDENTITE A PUCE

(30) Priority: 10.06.2004 US 864353; 14.12.2004 US 10382
(43) Date of publication of application: 06.06.2007
(73) Proprietor: SuperCom Ltd., 46725 Hertzliya Pituach (IL)
(72) Inventor: BASSON, Eli, 44208 Kfar Saba (IL); SHUMAN, Boaz, 56207 Yahud (IL); MERLING, Igor, 44100 Kfar Saba (IL); HASSAN, Eli, 45304 Hod Hasharon (IL); KANDER, Ilan, 43523 Raanana (IL); SCHECHTER, Avi, 52364 Ramat Gan (IL); LANDMAN, Avi, 26306 Kiryat Haim (IL)
(74) Representative: Boult Wade Tennant
(86) International application number: PCT/IL2005/000606
(87) International publication number: WO 2005/120726

(56) References cited:
- DE-A1- 4 311 385
- US-A- 6 121 544
- US-A1- 2003 132 301
- US-A1- 2004 012 496
- US-B2- 6 726 109

## Description

### FIELD OF THE INTENTION

The present invention relates to tamper-free and forgery-proof identification documents, and in particular to smart passports.

### BACKGROUND OF THE INVENTION

Security, particularly at major airports has become a significant concern. No printable identification is currently available to positively identify a passenger with high reliability. No means is currently available to transmit such information securely and to associate that information with user specific permissions

All passengers entering the USA have been required to bring a Machine Readable Travel Document (MTRD), i.e. a machine-readable passport since October 2003. Starting October 2004, the passport is required to contain biometric data that uniquely identifies its bearer. This turns the passport into a "smart" passport, which comprises a contactless chip that stores the personal biometric information as digital information. The chip is accessed contactlessly by a reader that retrieves the biometric information and compares it with information stored in a database, to verify the identity of the passport bearer. The International Civil Aviation Organization (ICAO) is setting the standard to be followed by all such smart passport issuers.

Smart documents are known in the art. Smart cards have been used to store personal information and even biometric information about their owners to facilitate electronic transactions. The information is stored on embedded chips, see for example Patent No. 6,219,439, US Patent No. 6,219,439 further describes a identifying characteristic authentication system using a smart card having stored physiological data of a user on a chip disposed therein, and a fingerprint scan (or retina scan, voice identification, saliva or other identifying characteristic data) for comparison against the stored data. The system is self-contained so that the comparison of the identifying characteristic data with the data stored on the chip is done immediately on board the reader without relying upon communications to or from an external source in order to authenticate the user. This arrangement also prevents communication with external sources prior to user authentication being confirmed, so as to prevent user data from being stolen or corrupted.

US Patent No. 6,101,477 describes a smart card for travel-related use, such as for airline, hotel, rental car, and payment-related applications. Memory space and security features within specific applications provide partnering organizations (e.g., airlines, hotel chains, and rental car agencies) the ability to construct custom and secure file structures. US Patent No. 5,291,560 describes a personal identification system based on iris analysis. US Patent No. 5,363,453 describes a personal identification system based on biometric fingerprint data. However, there is no encryption of the biometric information involved.

EP 0019191B1 discloses a paper of value (e.g. an ID) with an integrated circuit in which a checkable coding is written, the communication with the integrated circuit preferably being effected contactlessly via antennas. The integrated circuit is set in the gap of an at least partly metalized carrier foil. This foil is then laminated between two paper webs. Since the carrier foil is only laminated in between the two paper webs, however, there is the danger that the layers can be separated from each other relatively easily so that the plastic inlay provided with the chip can be used for possible forgeries. Further, this security element is a strictly machine-checkable security element that can only be checked by means of special detectors.

US Patent Application 20030164611 by Schneider discloses a security paper for producing documents of value, such as bank notes, certificates, etc., with at least one multilayer security element The security element is disposed at least partly on the surface of the security paper and has at least one visually checkable optical effect and at least one integrated circuit. Other recent US Patent applications relevant to the subject of the present invention include applications Nos. 20040081332, 20030117262, 20030116630, 20030099379, 20030093187 and 20020143588.

Another problem with existing smart or "radio operated" cards that include a Radio Frequency ID or RFID chip, is referred to as skimming, snooping or "stolen identity". Because such contactless devices can be read at a distance with a suitable transmitter and receiver, it is possible to surreptitiously obtain information from the card while it remains in the cardholder's possession. This may happen even if the card is in a purse or pocket. Similar stolen identity problems are likely to be encountered in the use of smart passports. Existing systems for preventing theft of information by unauthorized remote reading of an RFID chip in smart cards include various disabling mechanisms that prevent contactless reading of the card unless the mechanism enables signal transmission. Exemplary mechanisms are described in US patent Applications no. 10/334,572 filed Dec. 31, 2002 and 10/646,597 filed August 23,2003, both by Edwin J. Selker. These mechanisms include switches for connecting and disconnecting the antenna from the chip.

All prior art solutions deal with only partial aspects of the problem. All known solutions require basically a new product, fabricated with processes and steps materially different from existing processes and steps used in present day regular (non-smart) passports. Since these processes and steps differ from each other, there is no "standardized" manufacturing of a smart passport. No prior art solution is known to be a full solution that allows a regular passport to be transformed into a smart passport without requiring major production system changes and/or major fabrication step changes. Therefore, it would be advantageous to provide a smart passport that will not require major overhaul of existing methods and systems, yet fulfill its total security and forgery/tamper-proof functions. It would be further advantageous to find a "generic" solution that can incorporate various chips and operating systems (OSs) into the smart passport, which can then be issued by all authorized issuers that use such different chips and OSs.

US-A-2004/0012496 discloses a RFID tag comprising an antenna and a detector responsive to electromagnetic radiation of a predetermined frequency. The detector may be responsive to enable cooperation between the RFID circuitry and the antenna when light of the predetermined frequency is detected.

DE-A- 4311385 discloses an identification card having an intelligent memory chip and means for contactless data exchange, an optical sensor being integrated in the card and, in the absence of optical action, blocking or limiting the data exchange.

US Patent No. 6,726,109 B2 discloses a passport comprising an ID chip recording identification information. The chip is embedded in a page of the passport and can be read by radio-waves.

### SUMMARY OF THE INVENTION

The present invention discloses a method and system for providing secure, tamper-free and forgery-proof smart documents, in particular smart passports.

The present invention provides a smart electronic personal identification document, according to claim 1.

There is also disclosed below a smart inlay that has physical security components or "features", and which can be inserted into any standard passport, thereby turning it into a smart passport. The smart inlay is functionally flexible in that provides full accommodation of existing and emerging standards in the filed of smart documents, in particular of smart passports. These standards will include requirements for global interoperability, technical reliability, practicality and durability. The emerging standards will most likely require a digital representation of personal biometric information on a contactless chip in the passport booklet or in a visa. The digital representation will include data. The biometric representation may be that of a face and fingerprint or iris. The contactless chip may be made by a variety of manufacturers, according to the ISO 14443A/B or ISO 15693 standards. The booklet may include the smart inlay in its cover (using a cover substantially identical with that of existing, non-smart passports) or in a data page. In a visa, the visa sticker will contain the chip and its antenna.

The biometric information is expected to provide a singular match (comparison) of a person to data stored in a database for identity verification. All digital information on the chip will be cryptographically signed to prevent forgery. The planned biometric storage needs include ca. 12 KB (kilo-bytes) for a face, 10KB for a fingerprint, 30 KB for an iris and 5KB for text + overhead. At the least, a smart passport will require will need 32 or 64 KBs. The required antenna size is the same as in ID-1 size documents similar to a credit size card. The inlay has to be mechanically reinforced to protect the inlaid chip and antenna. Finally, the smart passport has to be readable by a contactless reader that supports both ISO 14443A and 14443B standards.

The smart inlay can accommodate a variety of chips, for example a Philips P5CT072 72K E²PROM or a ST Micro Electronics ST19XR34 34K E²PROM. The following further provides an upgrade path from a regular (non-smart) paper passport to a smart passport.

In the Following, there is provided a smart electronic personal identification document, comprising: (a) a smart identification module including a contactless chip module and an antenna, the smart identification module being operative to store and exchange personal identification information contactlessly with an external reader; and (b) an anti-skimming element for disposing adjacent to the smart identification module, the anti-skimming element being configured for preventing unauthorized theft of the information.

There is also provided a booklet having a plurality of pages, the smart identification module being incorporated with one of the pages.

The booklet may be a passport booklet

The anti-skimming element in an alternative to the invention may be an electrically conductive shield disposed adjacent to the smart identification module.

In another alternative example, there is provided a holder for carrying the smart identification module, wherein the anti-skimming element is disposed in the holder.

In another alternative to the invention, the anti-skimming element may be an electrically conductive shield disposed in the holder.

In another alternative to the present invention, the anti-skimming element is formed from an electrically conductive material selected from the group of metallic materials, conductive polymers and conductive composites.

In an alternative to the present invention, the switching arrangement is disposed in the antenna.

In another alternative to the present invention, the switching arrangement is configured in order to be actuated by an external key.

The switching arrangement may be disposed between the chip module and the antenna.

The identification document may be in the form of a booklet having a plurality of pages, the smart identification module being attached to one of the pages. Alternatively to the invention the switching arrangement may include a mechanical switch disposed in the booklet such that, when the booklet is closed, the switching arrangement disables transmission of the information by the smart identification module.

Alternatively, the mechanical switch may be configured such that, when the booklet is opened more than a threshold angle, the switching arrangement enables transmission of the information by the smart identification module.

According to a further feature of the present invention, the chip module has a power supply voltage input pin and an output enable pin, the light sensor being electrically connected to the power supply voltage input pin and the output enable pin so that light incident on the light sensor selectively enables and disables the output of the chip module.

Alternatively, the anti-skimming element may include an absorbing element configured for at least partially absorbing electromagnetic waves propagated between the smart identification module and any external reader.

Alternatively, the absorbing element may be configured for resonating at the frequency of the electromagnetic waves.

The absorbing element may be an absorbing electronic element including a circuit and an antenna electrically connected to the circuit.

The absorbing element may be an absorbing magnetic element.

The absorbing magnetic element may include ferrite dust.

Alternatively, the anti-skimming element may include a phase-shifting electronic element configured for transmitting a signal which is out-of-phase with the electromagnetic waves thereby generating at least one interference with the electromagnetic waves and noise.

There is also provided a electronic personal identification processing system for processing information of a smart electronic personal identification document, the document including a contactless chip module and an antenna, the document being operative to store and exchange personal identification information contactlessly with an external reader, the system comprising: (a) a personal identification document reader configured for reading the information contactlessly from the smart electronic personal identification document; (b) a processing terminal configured for sending commands to the reader and for validating the information from the document; and (c) a communication link operationally linking the reader and the processing terminal, each of the reader and the processing terminal including an encoder and decoder arrangement so that data transmitted between the processing terminal and the reader is encoded.

The reader may be a passport reader configured for contactlessly reading information from passports.

There is also provided a personal identification document reader for reading information from a smart electronic personal identification document, the document including a contactless chip module and an antenna, the document being operative to store and exchange personal identification information contactlessly with an external reader, the reader comprising: (a) a housing; and (b) a contactless reading element configured for contactlessly reading the information from the document, the reading element being disposed in the housing, the housing having an opening therein for inserting the document into the housing for reading by the reading element, the housing being configured as a faraday cage thereby preventing unauthorized theft of the information stored in the document while being read by the reading element

### BRIEF DESCRIPTION OF THE DRAWINGS

The invention is herein described, by way of example only, with reference to the accompanying drawings, wherein:
Fig. 1 shows an example of a smart inlay a) cross-section; b) top view; c) top view of three attached smart inlays; and d) view of a smart inlay trimmed from a strip;
Fig. 2 shows examples of a smart passport incorporating the smart inlay: a) attached to a smart passport cover; b) inserted into the inside of a smart passport booklet;
Fig. 3 shows schematically steps in the manufacturing of the smart inlay: a) main process steps; b) detail of a patterned first adhesive with "voids"; c) various adhesive patterns overlaid with an antenna;
Fig. 4 shows schematically a summary of a set of logical operations involved in functionalizing the smart passport and rendering it logically forgery-proof;
Fig. 5 shows a detailed flow-chart of the operations involved in the fabrication and functionalization of both a smart inlet and a smart passport;
Fig. 6 shows a shielding element for use with the smart passport: a) in between a page and the cover; b) in between two pages; c) on the external face of the cover;
Fig. 7 shows a shielding element for use with the smart passport when: (a) the passport is open and positioned over a contactless reader; (b) the passport is closed, with the shield preventing contactless reading of the information in the chip;
Fig. 8a is a schematic view of a smart identification module having a switching arrangement for use with the smart passport ;
Fig. 8b is a schematic view of the switching arrangement of Fig. 8a when the smart passport is closed;
Fig. 8c is a schematic view of the switching arrangement of Fig. 8a when the smart passport is open;
Fig. 9a is a schematic view of a smart identification module having a light sensing switching arrangement for use with the smart passport of the present invention;
Fig. 9b is a schematic view of an alternate smart identification module having a light sensing switching arrangement for use with the smart passport of the present invention;
Fig. 10a is a schematic view of a smart identification module having a key operated switching arrangement for use with the smart passport ;
Fig. 10b is a schematic view of a passport reader for use with the smart identification module of Fig. 10a;
Fig. 11 is a schematic view of an electronic absorbing element for use with the smart passport ;
Fig. 12 is a schematic view of a magnetic absorbing element for use with the smart passport;
Fig. 13 is a schematic view of a phase shifting electronic element for use with the smart passport ;
Fig. 14 is a schematic view of a passport information processing system;
Fig. 15a is a schematic isometric view of a passport reader;
Fig. 15b is a plan view of the passport reader of Fig. 15a; and
Fig. 15c is a cross-sectional view along line A-A of Fig. 15b.

### DETAILED DESCRIPTION OF THE PREFERRED EMBODIMENTS

The following discloses devices and methods for providing secure, tamper-free and forgery-proof smart documents, in particular smart passports. The following discloses in particular a smart inlay to be used in a smart passport, and security features that make such a smart passport tamper-proof and forgery-proof. The following further provides an upgrade path from a regular (non-smart) paper passport to a smart passport.

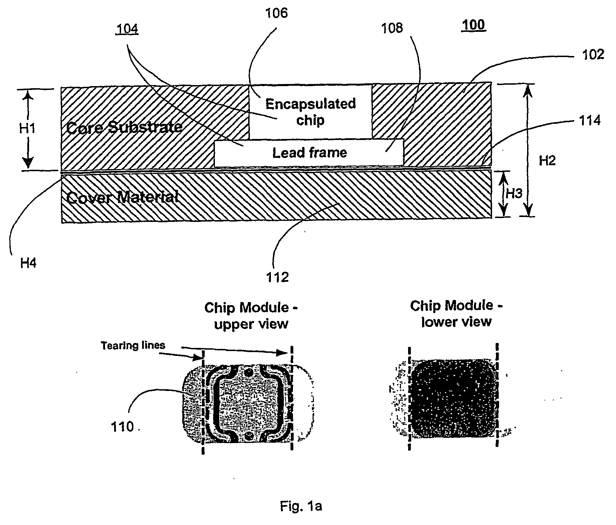

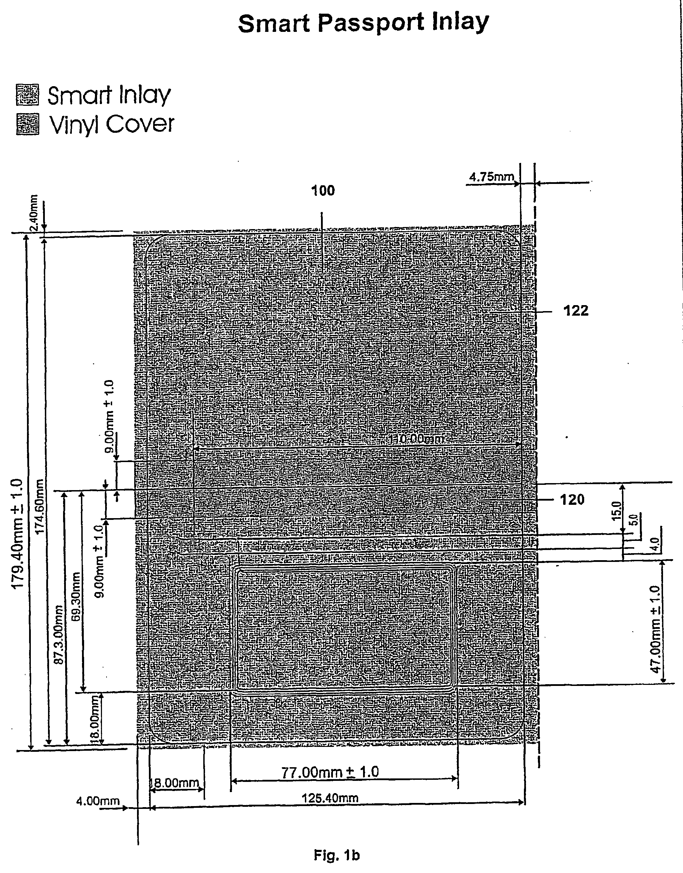

Fig. 1a shows in cross section a smart inlay **100.** Smart inlay **100** comprises a core substrate (or "core layer") **102** made preferably of synthetic sheets, e.g. from Teslin manufactured by PPG Industries (www.ppg.com) or Artisyn manufactured by Darmic Inc. (www.daramic.com). Each of these materials provides a number of important advantages: each allows a judicious choice and application of tamper-proof adhesives, for example poly-vinyl-acetates (PVAs), thermoplastic adhesives such as ethylene vinyl acetate (EVA) or polyethylene (PE), or the family of thermo-set adhesives. Teslin and Artisyn are further advantageous in that one can use most adhesives or glues that are water-based, solvent-based or heat or pressure activated, single or dual component. Alternatively, the core substrate material may include Vinyl or Polyurethane based materials. Smart inlay **100** further comprises an embedded contactless chip module **104** that includes an encapsulated chip **106** and a lead frame **108,** and tearing lines ("tear lines") **110** that provide a first main security component. Tear lines **110** are preferably positioned under the lead frame electrodes. Alternatively, the tear lines may extend the whole width of the inlay, to provide added bending flexibility (in addition to a weak spot) to the passport into which the inlay is incorporated (see below). Smart inlay **100** further comprises an antenna **120** that allows two-way communication between the chip and an outside contactless reader system (not shown). The chip module is electrically connected to the antenna through the lead frame. Optionally, smart inlay **100** further comprises a cover material **112** attached to the core by a thin layer of adhesive **114,** preferably a highly solvent resistant adhesive, and most preferably a thermo-set-type adhesive with a relatively high bond breaking temperature, e.g. serial number 9534 manufactured by Apollo (www.apolloadhesives.com), 3M (www.3m.com) adhesive sheet 9218, 9200 or 9328, or Scapa Tape G175 (www.scapatapesna.com). The core substrate has a typical thickness of 220-240 micron, while the smart inlay has a typical size that fits in a page of a smart passport, see for example Fig. 1b. Other dimensions in Fig. 1a are marked H1, typically 380 microns, H2, typically 30 microns, H3, typically 350 microns and H4, typically 20-50 microns. Advantageously, the chip may be any standard chip such as a Philips P5CT072 72K E²PROM or a Thompson ST19XR34 34K E²PROM.

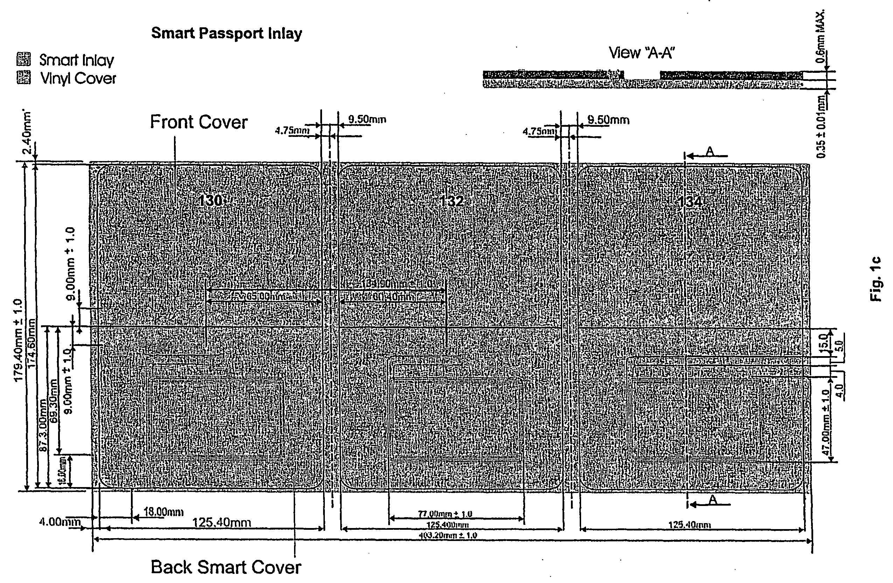

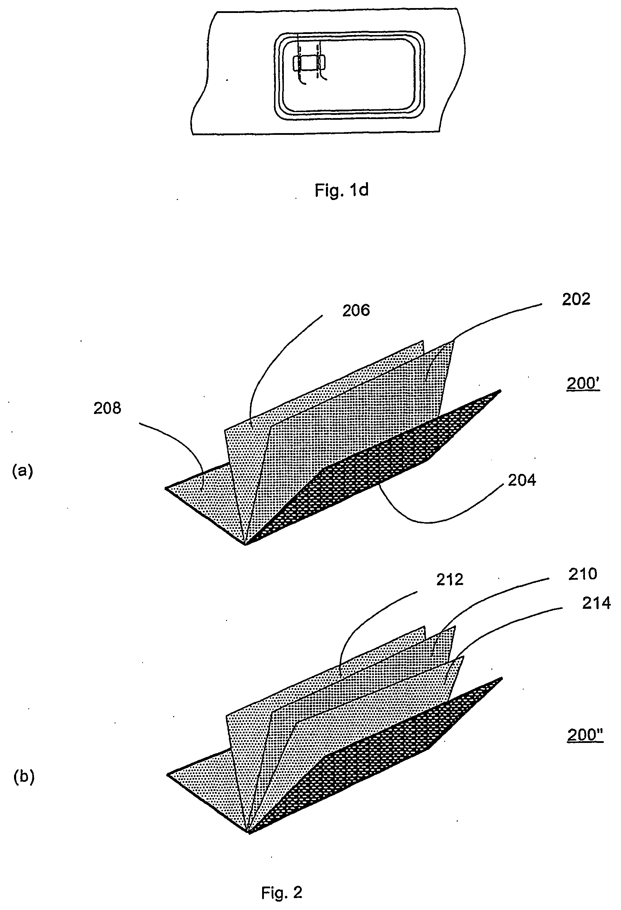

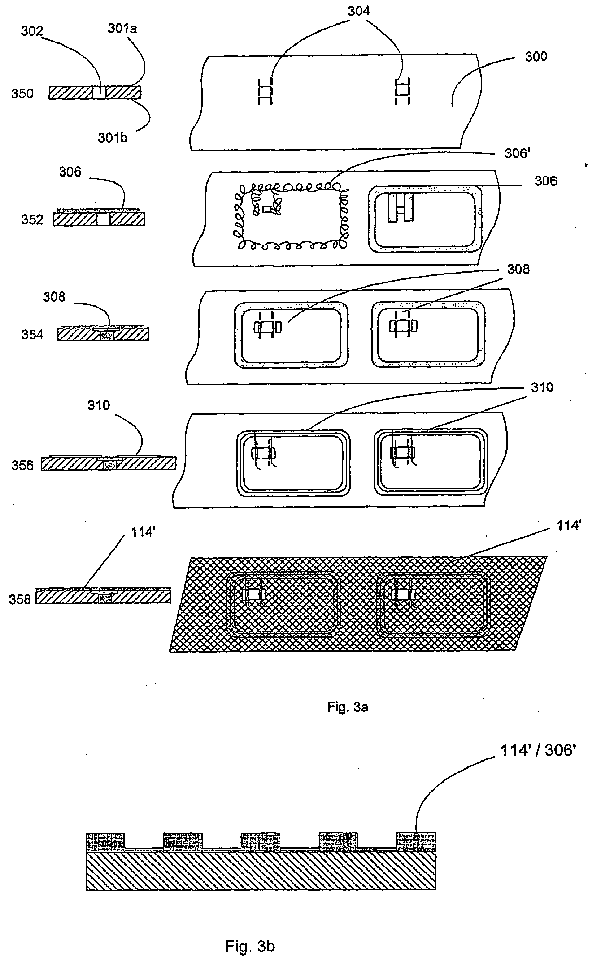

Fig. 1b shows in a top view a smart passport inlay ("smart cover") with vinyl cover **120** (normally inserted in the "back cover" of a passport, see below) complemented by a "dumb" section **122** (normally inserted in a "front cover" of a passport, see below), both with typical dimensions indicated on the figure. As shown in Fig. 1c, for efficient production purposes (described in more detail in Fig. 3a), the smart inlay may be included in a set of attached smart inlays on a continuous reel, in this case three inlays **130, 132** and **134.** Fig. 1d shows a single smart inlay 150, cut away from the continuous reel. The dimensions shown in both Figs. 1b and 1c are exemplary only, and are in no way limiting.

Fig. 2a shows a smart passport booklet **200'** that includes a smart inlay **202** incorporated into a cover **204** (usually a back, fiber-reinforced vinyl cover, for example one manufactured by ICG Holliston (www.icgholliston.com)). The figure further shows an external booklet page **206** and the rest of the booklet contents **208.** Fig. 2b shows a smart passport booklet **200"** in which a smart inlay **210** is incorporated between two internal pages **212** and **214.** In this case, the inlay may be glued to either one or both of the internal pages, attached directly to the passport backbone, or both. The attachment to the passport backbone can be done either by sowing part of the inlay into the backbone, by lamination to a cover or to a page, by gluing, or by other known means.

Fig. 3a shows schematically steps in a preferred manufacturing process of the smart inlay. The manufacturing is performed in a system in which a continuous material strip **300,** preferably made of Teslin or Artisyn is fed by a reel. Smart inlay cores with a top surface **301a** and a bottom surface **301b** are part of strip **300.** First, a chip hole **302** and local weakening patterns in the core layer, referred to hereinafter generically as "tear lines" **304** are fabricated (e.g. punched) in the feed strip in a step **350.** The tear lines are designed to provide a local weak link in the smart inlay, so that any attempt to separate the core layer from the cover will lead to irreversible core substrate deformation and mechanical destruction of the antenna/chip assembly. That is, such an attempt will cause the separation of the antenna from the chip, or the breakup of the chip electrode / lead frame. This is one main physical security feature of the smart inlay. The tear lines may be in the form of perforations, preferably positioned under the electrode area as shown in Fig. 1a or as thinned areas in the core layer in the same places. Any attempt to tamper with the finished inlay, e.g. trying to separate the core layer from the vinyl cover (or from an internal cover or page if the inlay is inserted between two booklet pages) will result in the failure described above. A first adhesive pattern **306** designed for antenna positioning and securing to the core (also referred to herein as "antenna base adhesive") is deposited on top surface **301a** in step **352.** The antenna base adhesive pattern may be variable in size and shape, and may cover either partially or substantially totally the area of the top surface. In case it covers substantially the entire inlay surface, this may be the only adhesive layer applied in the manufacturing process. The adhesive may be any type of adhesive, for example PE or EVA, an adhesive such as 3M adhesive sheet 9218, 9200 or 9328, Scapa Tape G175, or a pressure sensitive adhesive such as D74 manufactured by Colquimica (www.colquimica.pt).

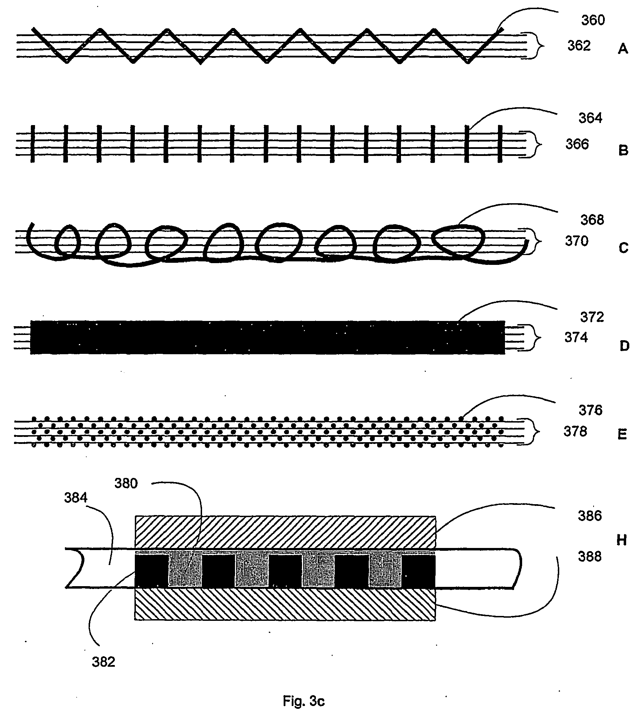

In the case of the first adhesive layer being the only layer in the process, the preferred adhesive is a thermo-set adhesive such as serial number 9534 manufactured by Apollo (www.apolloadhesives.com). Thermo-set adhesives behave irreversibly and have a wide range of bond-breaking temperatures that reaches over 200 degrees C. This makes the adhesive itself the "strong" link in the composite layer structure, and ensures failure in places other that the adhesive, providing yet another physical security feature. Furthermore, if the first adhesive is the only adhesive used, it is further preferably patterned, as explained with reference to Fig. 3c below. As used herein, a "patterned" adhesive means any non-smooth, irregular adhesive surface, layer thickness, or general appearance. Preferably, the pattern follows some regular periodic form or topology such as regular corrugations, mesh, waves, zigzag, spring-like, or other geometric shapes. Advantageously, the first adhesive pattern may be segmented or placed in a patterned structure 306' that has gaps or "voids", as shown in Fig. 3b. This allows a second adhesive (glue) layer **114**' (see below) to fill the gaps, creating a composite structure of the two glues and further strengthening the product. In other words, the non-smooth and non-uniform application of the first glue layer that leads to the formation of a composite, interlaced, or intermingled structure with the second adhesive, results in even greater resistance to tampering and forgery. If any attempt is made to separate the smart inlay layers, or to separate the inlay from the cover or page it is attached to, the strong adhesive composite will cause failure in a non-adhesive "weak spot" and result for example in the tearing of the antenna or of the smart inlay layer materials, or in the destruction of the chip. The glue may be also layered on the chip area, leading to additional weak spots (added to those provided by the tear lines) which may cause potential breakage of the chip if an attempt is made to separate the layers.

In step **354,** a chip module **308** (shown in more detail in Fig. 1a) is pressed in from the top surface into chip hole **302.** In step **356,** an antenna **310** is wound on top of the patterned adhesive layer and attached (e.g. welded or soldered) to respective chip connections on the chip lead frame. This is followed by pressing the antenna, typically under additional heating into adhesive pattern **306** to form a flat surface.

As mentioned, when the smart inlay (and its "dumb" section in case of a smart cover) produced in steps **350-356** is about to be attached to a cover, a second adhesive layer **114**' (used if the first adhesive layer does not fulfill that function) is introduced between the inlay and the cover and used to fill any voids in glue layer **306'.** The introduction of this layer is shown in an additional step **358.** It has been determined experimentally that attempts to peel off the inlay from the cover show distinct tampering effects when second adhesive layer **114'** is also applied in a patterned form (independently of the form, patterning or even presence of a first adhesive layer), as shown in both step **358** and in a cross section in Fig. 3b, which shows a tooth-like adhesive layer **306'** or **114'** formed on the core substrate. To emphasize, patterning either or both adhesive layers advantageously improves the security aspects of the smart inlay and passport. This constitutes yet another physical security feature.

Fig. 3c shows several examples of geometries of patterned adhesives. **A-E** show a first adhesive overlaid with the antenna, and **H** shows a cross section of a composite, two-adhesive structure with the antenna in the middle. In more detail, **A** shows a zigzag first adhesive pattern **360,** overlaid by an antenna **362. B** shows a series of glue segments **364** overlaid by an antenna **366. C** shows a "stretched spring" adhesive pattern **368** overlaid by an antenna **370. D** shows a full adhesive strip **372** overlaid by an antenna **374. E** shows a dot adhesive pattern **376** overlaid by an antenna **378.** In all cases, "overlaid" preferably also means that the antenna is actually sunk into the adhesive, so that is in the same plane as the adhesive. Methods for deposition of patterned adhesives are well known in the art.

**H** shows in cross section a composite adhesive structure in which a first adhesive **380** and a second adhesive **382** (both having a tooth-like appearance as in Fig. 3b) are interlocked or interlaced, locking in an antenna **384.** The first adhesive is deposited such that it has a plurality of holes, "dips" or "valleys" in the vertical direction perpendicular to the core substrate top surface. The antenna is wound and pressed in, preferably under heat, as described in step **356.** The second adhesive layer is then applied, filling in the holes, dips or valleys of the first adhesive, and locking the antenna in place in the composite two-adhesive layer. The cross section in **H** is in essence an enlargement of line **114** with thickness H4 in Fig. 1a for a specific example. Thus, the two adhesives and the antenna are locked between a core substrate 386 and a cover **388.**

The foregoing thus advantageously provides a number of physical security features, some of which have been mentioned above and some of which will be discussed in more detail now. All physical security features are geared toward providing a tamper- proof product. First, the tear lines mentioned and shown with regard to Fig. 1a provide security by causing destruction of the functional integrity of the smart inlay (e.g. separation of the antenna from the chip or breakage of either the antenna or the chip) in the case of any tampering attempt. Second, the use of preferably thermo-set adhesives implies irreversibility and allows a choice of high enough bond-breaking temperatures. This ensures that any attempt to separate the different layers results in layers deformation or destruction before adhesive bond breaking. Third, the patterning either of the first or of the second adhesive (or both coexisting together) provides additional tamper-proof security because the adhesive competes locally in strength with the core material.

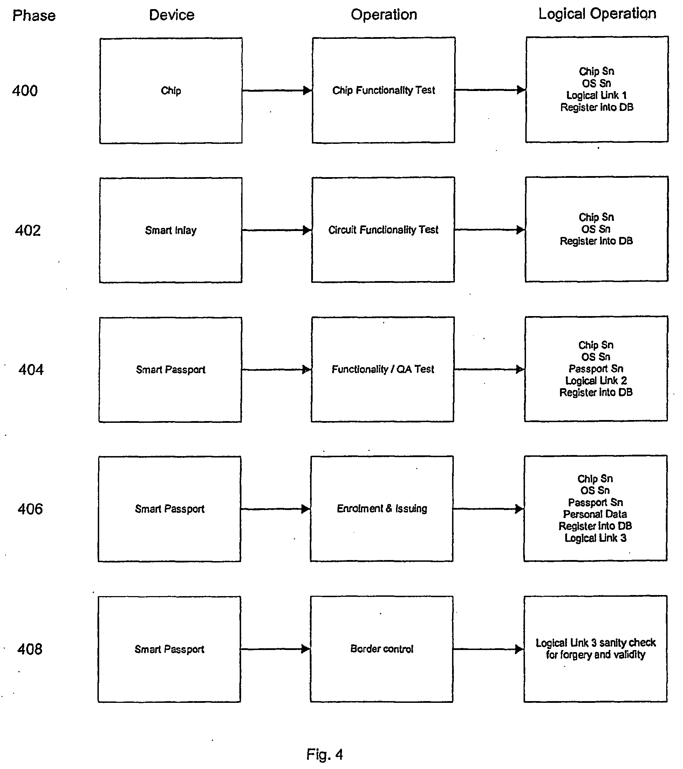

Fig. 4 shows schematically a summary of a set of logical operations involved in functionalizing the smart passport and making it logically forgery-proof. The set of operations includes five phases, each phase including a physical operation performed on a device, and an attendant logical operation occurring in a computer database. In phase **400,** the chip functionality is tested, resulting in the storage (registration) of a chip serial number (CSN) and a chip operating system serial number (OSSN) in the computer database. The database allows to establish a unique logical link between the CSN and the OSSN, referred to herein as "logical link 1". In phase **402,** the complete circuit of the smart inlay including the antenna is functionally tested and the results registered in the database. In phase **404** the smart passport is functionally tested, and a passport serial number (PSN) identifying the passport booklet is retrieved from the booklet and registered in the database. This establishes a second logical link between the CSN, OSSN and PSN, referred to herein as "logical link 2". In phase **406,** the passport is issued to a particular person, and personal information, preferably biometric (e.g. photo, iris, fingerprint, etc.) is inserted into both the passport and the database. At this stage, a unique link (also referred to as "logical link 3") is created between the passport and the person to which it is issued using a combination of some or all of logical links 1 and 2 and the personal information. This may be done for example by creating a unique "key" or "secret" using encryption or encoding well known in the art. The "key" or the "secret" is stored in the database and optionally in the passport (chip) and may be retrieved after accessing its location in the chip memory using an access key. In phase **408,** the smart passport is presented at a border control station to identify its carrier. A check is made to restore the unique "key" or "secret" formed by the combination of logical links 1 and 2 and the personal information of the carrier. The result of this check is matched against the stored "key" or "secret" stored in the database and optionally in the passport. If there is no fit, the implication is that the carrier and the passport do not match, and/or that the passport is forged.

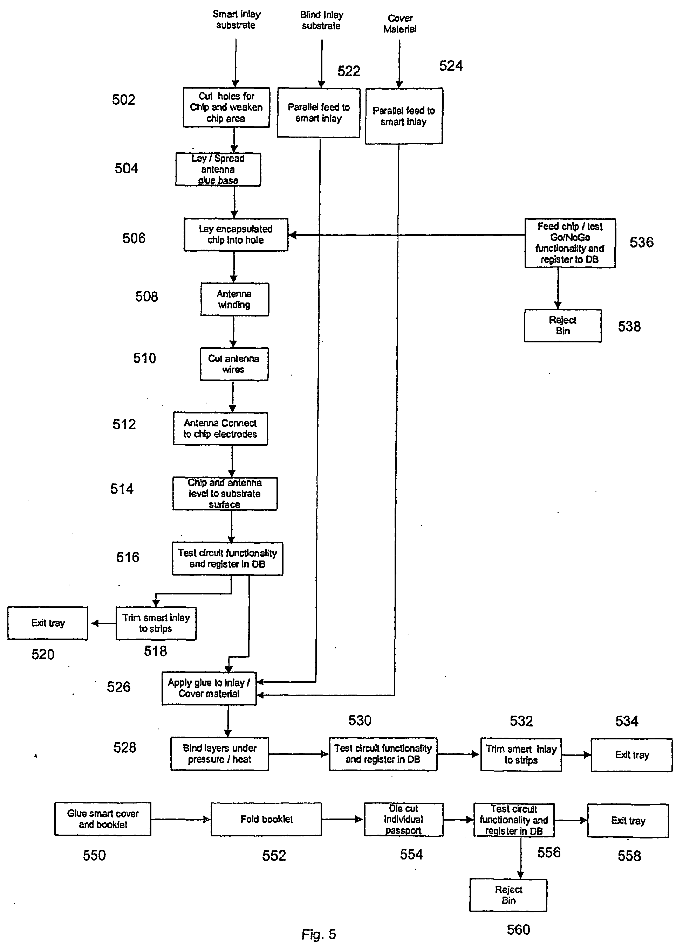

Fig. 5 shows a detailed flow-chart of the operations involved in the fabrication and functionalization of both a smart inlet and a smart passport. The process starts with the fabrication of the smart inlay substrate, in a system that may be substantially similar to that described for smart cards in US Patents 6,108,022 and/or 5,973,710 to Landsman. Following essentially the steps in Fig. 3a, chip holes and weakened substrate areas (tear lines) are made in a core substrate in step **502,** followed by spreading of the antenna glue base (first adhesive layer) in step **504,** and insertion of the encapsulated chip into the hole in step **506.** At this point, a chip functionality test (process **400** in Fig. 4) is run in step **536** to test Go/NoGo chip functionality and to essentially form logical link 1 as described above. If the test fails, the chip is rejected in step **538** and another chip is placed in the hole. If the test is successful, the antenna is wound on the adhesive layer in step **508,** its wires are trimmed (cut) in step **510** and the antenna is welded to the chip electrodes in step **512.** The chip and antenna are then leveled flush with the top surface of the core substrate in step **514.** A second test (process **402** in Fig. 4) is run to test circuit functionality, i.e. to confirm that the circuit is active. If the test fails, the smart inlay is marked and trimmed into a strip in step **518** and placed in an exit tray in step **520** (resulting in the product seen in Fig. 1b). To produce a smart cover, a blind inlay substrate material similar to the smart inlay core is supplied in step **522,** a preferably vinyl cover material is supplied in parallel in step **524,** and all three elements (smart inlay substrate, blind inlay substrate and cover) are bound together in step **526.** The binding is preferably done by applying the second adhesive layer to either the inlay, the cover or both. The layers are bound under pressure and heat (depending on the type of glue) in step **528,** followed by a third test (process **404** in Fig. 4) in step **530,** following which a defected smart cover is marked. A "good" smart inlay is trimmed to strips in step **532** and placed in an exit tray in step **534** (resulting in the product shown in Fig. 1c).

The smart passport is now prepared using the smart inlay provided in step **534.** If in the form of a smart cover, the smart inlay is glued or attached otherwise to a passport booklet in step **550,** the booklet is folded in step **552,** and each individual passport is cut in step **554.** A fourth test (process **406** in Fig. 4) is run in step **556.** If the test fails (passport does not respond to a reader), the smart passport is marked as rejected and placed in a reject bin in step **560.** If the test succeeds, the passport is ready for issuing and placed in an exit tray in step **558.**

### Stolen Identity Prevention

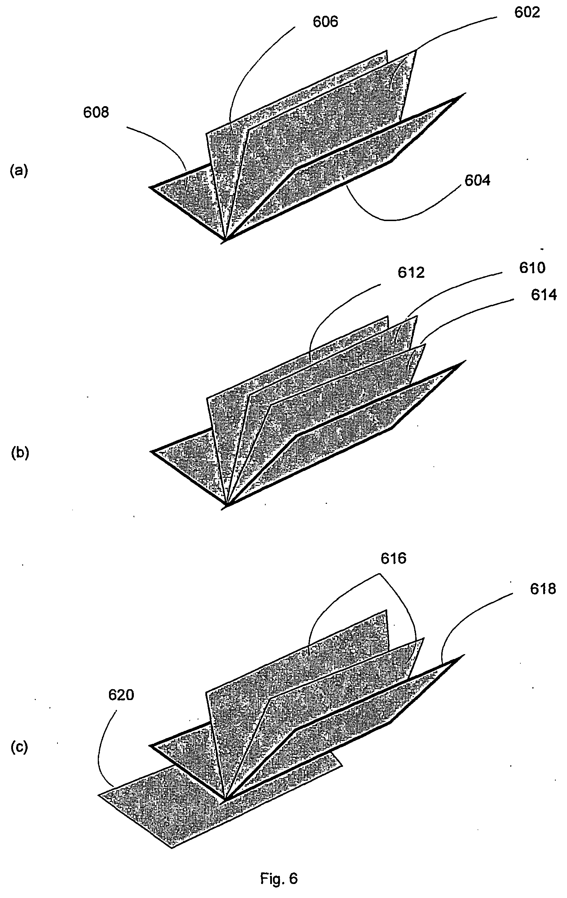

By way of introduction, the smart passport described hereinabove is further protected against stolen identity by using an anti-skimming element. The anti-skimming element generally prevents a passport reader from reading information of the passport when the passport is closed and therefore not intended for use. Various anti-skimming elements are described below with reference to Figs. 6 to 13 for deployment in the passport booklet. The examples of Figs. 6, 7 and 11-13 are also for deployment in a holder configured for storing the passport booklet when the passport booklet is not in use.

The anti-skimming elements have been described hereinbelow for use with a smart passport and smart passport readers. However, it will be appreciated by those ordinarily skilled in the art that anti-skimming elements can be deployed with any contactless electronic personal identification documents, which are readable by contactless personal identification document readers. The electronic personal identification documents are typically part of a booklet (for example, a passport) or a card (for example, a driving license). The booklet or card are typically stored in a holder. Personal identification typically includes such details as name, address, and place and date of birth.

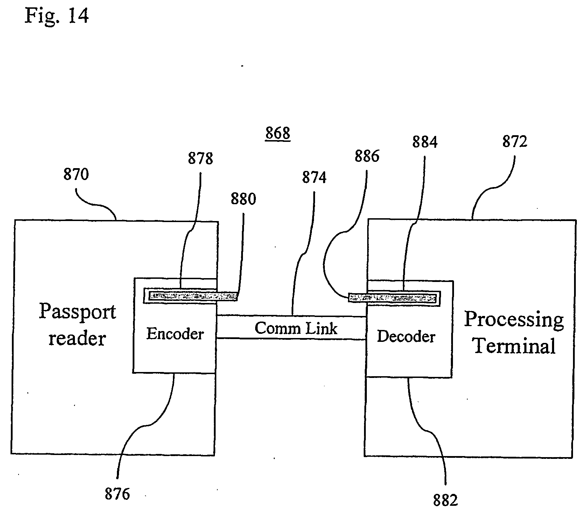

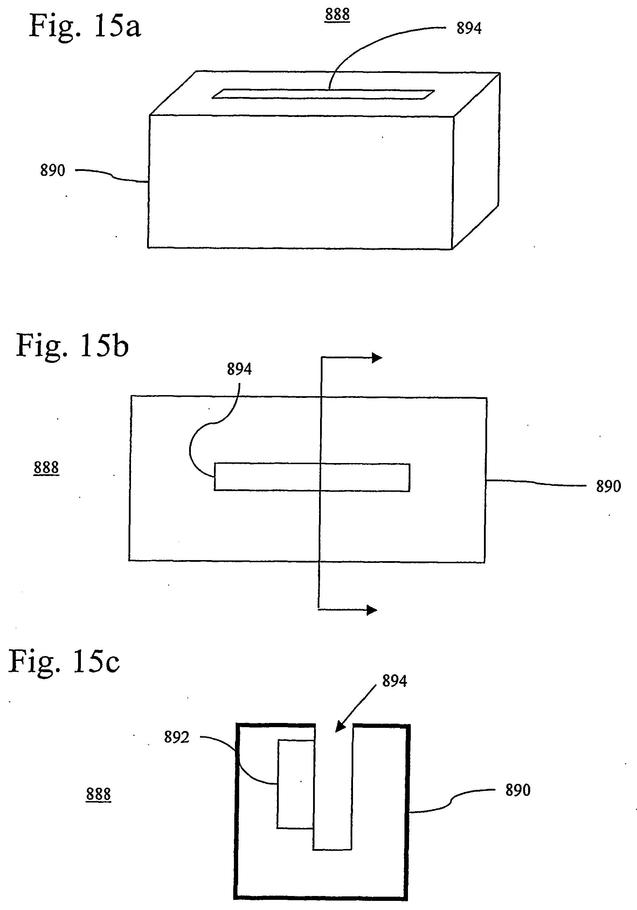

Figs. 14 and 15 describe passport reading and validation systems which further prevent unauthorized acquisition of passport information. It will be appreciated by those ordinarily skilled in the art that the teachings of the passport reading and validation systems described herein can be applied to contactless personal identification document readers and processing systems in general.

Reference is now made to Fig. 6, which shows a smart passport booklet, of the type described hereinabove. In order to prevent a stolen identity action, the passport further comprises a shielding element **602** (or simply "shield"), operative to shield the antenna in the smart inlay (e.g. **120** in Fig. 1) from an external reader. In the most general sense, the shield may have any profile capable of electrically shielding the antenna. Preferably, two shields are disposed, each on a separate page, in order to surround the chip and antenna when the passport booklet is closed, thereby acting as a Faraday cage for the antenna and chip. The physics behind Faraday cages is well known in the art. It will be appreciated by those ordinarily skilled in the art that the shield need only be on a single page of the passport booklet. Preferably, the shield is a conductive element resembling or attached to a passport page, e.g. **602** in (a) or **610** in (b). The shield may not be positioned together with the chip in the smart inlay, but may be positioned either between an external cover **604** and a page **606** as in (a), or between two pages **612** and **614** as in (b). Alternatively, the shield may incorporated in, or attached to the inside part of an external passport cover. The external cover incorporating the shield must be on the opposite side to the location of the chip and antenna, to allow the opening of the passport before placing it over the reader. Further alternatively, a shield **620** may be positioned externally to a passport with internal pages **616** a cover **618** and fashioned into any suitable shape as in (c). Such an external shield may be attached to or incorporated in a passport holder, e.g. a pouch or case carrying the passport. The shield may be made of any conductive material capable of providing shielding from electromagnetic radiation, for example a metal, a conductive polymer, a conductive composite, etc. Preferably, the shield may be formed into a shape such as a thin foil or mesh that does not significantly impact the feel and shape of the passport, its covers or its pages. Alternatively, the conductive material may be incorporated into the raw materials used in the smart passport fabrication.

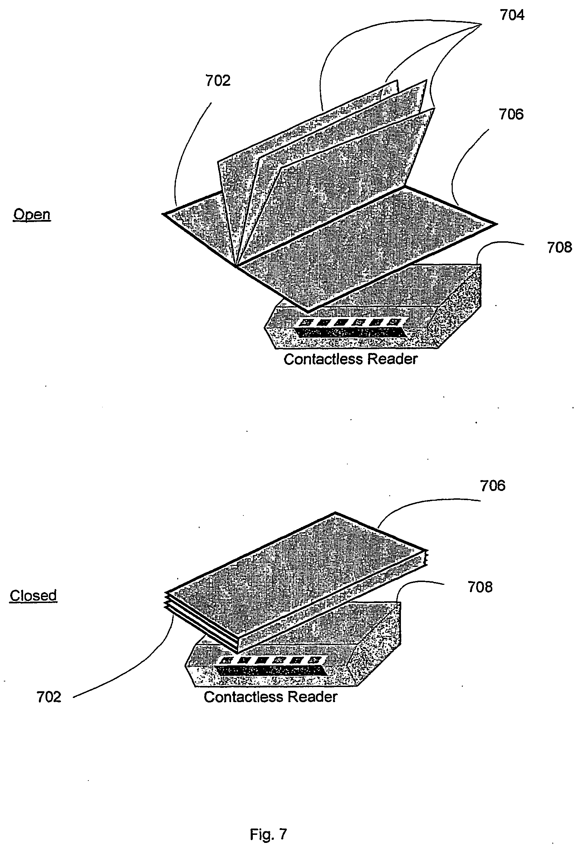

Reference is now made to Fig. 7, which shows a smart passport comprising a first external cover section **702** that includes a shield (not shown), a plurality of pages **704** and a second cover section **706.** In (a), the passport is open and positioned over a contactless reader **708** such that the shield in cover **702** does not prevent communications between the reader and the chip in the smart inlay. In (b), the passport is closed, with the shield preventing contactless reading of the information in the chip. If the shield is incorporated internally, between two pages or between a page and a cover, the action would be the same: when open, the passport is positioned such that the contactless reader can read it. When closed, the shield prevents information theft.

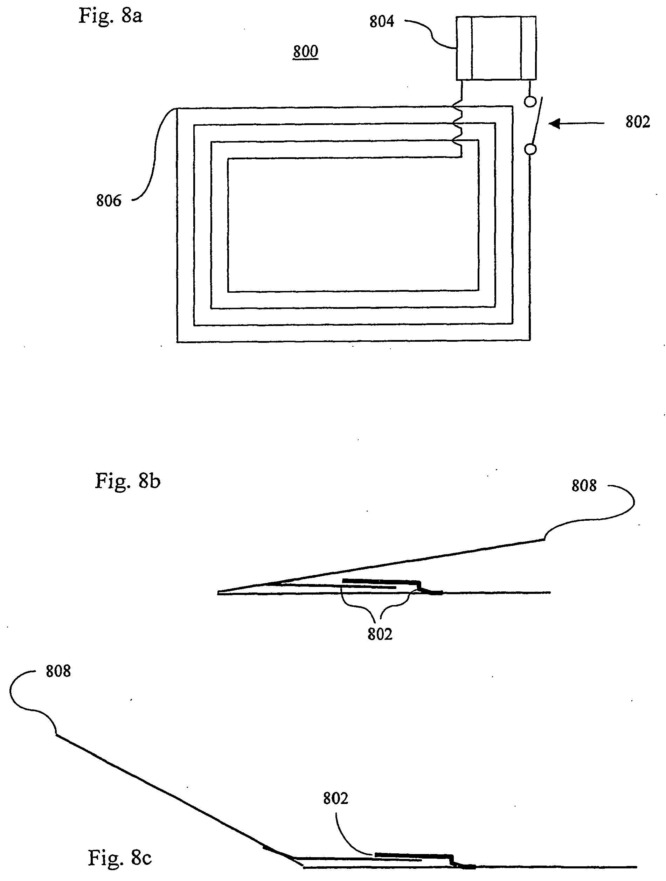

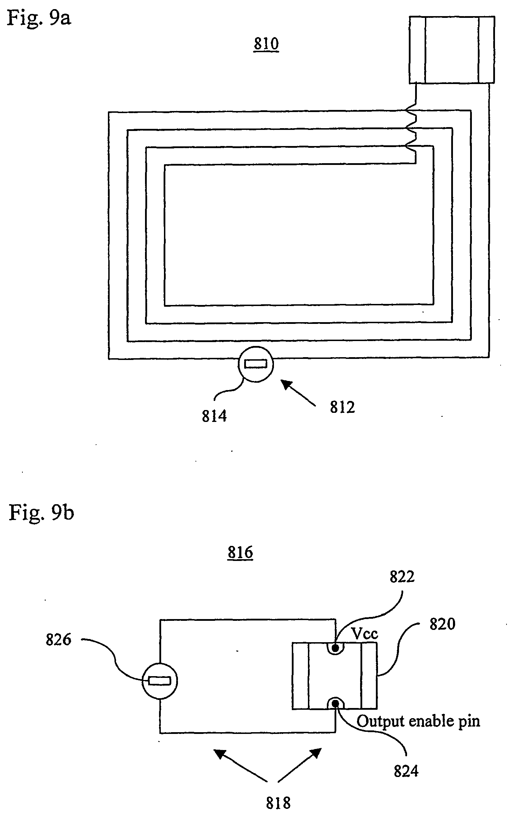

Reference is now made to Figs. 8a to 8c. Fig. 8a is a schematic view of a smart identification module 800 having a switching arrangement 802 for use with the smart passport. Fig. 8b is a schematic view of switching arrangement **802** of Fig. 8a when the smart passport is closed. Fig. 8c is a schematic view of switching arrangement **802** of Fig. 8a when the smart passport is open. Smart identification module **800** includes a contactless chip module **804** and antenna **806.** Smart identification module **800** is operative to store and exchange personal identification information contactlessly with an external reader. Smart identification module **800** is disposed on at least one of the pages of a passport booklet **808** using one of the methods described herein above with reference to Figs. 1-5. Switching arrangement **802** forms part of an anti-skimming element for preventing unauthorized theft of the information stored on contactless chip module **804.** Switching arrangement **802** is electrically connected to contactless chip module **804** and antenna **806** acting as a circuit breaker for selectively enabling and disabling transmission of the information stored in contactless chip module **804.** Switching arrangement **802** is disposed so as to break the contact between contactless chip module **804** and antenna **806.** It will be appreciated by those ordinarily skilled in the art that switching arrangement **802** can be disposed to break the continuity of antenna **806** thereby enabling/disabling antenna **806.** Additionally, it will be appreciated by those ordinarily skilled in the art that switching arrangement **802** can be disposed so as to enable/disable output from contactless chip module **804,** as will be described with reference to. Fig. 9b. Switching arrangement **802** is a mechanical switch typically disposed in the cover of passport booklet **808,** such that, when passport booklet **808** is closed, switching arrangement **802** disables transmission of the information by contactless chip module **804** and when passport booklet **808** is open more than a threshold angle, switching arrangement **802** enables transmission of the information by contactless chip module **804.** The term "sufficiently open" is defined herein as being open enough so as to actuate the switch. It will be appreciated by those ordinarily skilled in the art that when the circuit is "broken" by switching arrangement **802,** contactless chip module **804** can neither receive nor transmit data. Similarly, when the circuit is "closed" by switching arrangement **802,** contactless chip module **804** can receive and transmit data. Switching arrangement **802** typically includes two conducting sections which make contact when passport booklet **808** is opened. Switches similar to switching arrangement **802** are used in novelty greeting cards, which play a tune when the card is opened.

Reference is now made to Fig. 9a, which is a schematic view of a smart identification module **810** having a light sensing switching arrangement **812** for use with the smart passport of the present invention. Light sensing switching arrangement **812** includes a light sensor **814** configured such that, when light sensor **814** is exposed to light above a threshold light level, light sensing switching arrangement **812** enables transmission and receiving of information by smart identification module **810.** Similarly, when the light incident on light sensor **814** drops below a threshold light level, light sensing switching arrangement **812** disables transmission and receiving of information by smart identification module **810.** Light sensor **814** is typically disposed on an inner face of a cover page or as part of smart identification module **810** so that when the smart passport is opened to the page including smart identification module **810,** communication is enabled and when the smart passport is closed the communication is disabled. As a practical matter, the passport reader typically includes a light source in order to ensure that light sensor **814** receives enough light during reading of the smart passport by the passport reader. Therefore, light sensor **814** is disposed so that light sensor **814** faces the light source of the reader when the smart passport is placed over the reader. The term "light" is defined herein to include any radiation between infrared and UV. In order to increase security, light sensor **814** is preferably a non-visible light sensor or a sensor of a discrete frequency of radiation and the passport reader has a similar non-visible source (e.g. Infrared source) or a discrete frequency source (e.g. a laser), respectively. Therefore, simply opening the passport does not render the passport enabled for communication until light sensor **814** is exposed to the source of the reader.

Reference is now made to Fig. 9b, which is a schematic view of an alternate smart identification module **816** having a light sensing switching arrangement **818** for use with the smart passport of the present invention. Light sensing switching arrangement **818** includes a light sensor **826.** Smart identification module **816** includes a chip module **820.** Chip module **820** has a power supply voltage input pin **822** and an output enable pin **824** or equivalent functionality pins. Light sensor **826** is electrically connected to power supply voltage input pin **822** and output enable pin **824** so that light incident on light sensor **826** selectively enables and disables the output of chip module **820.**

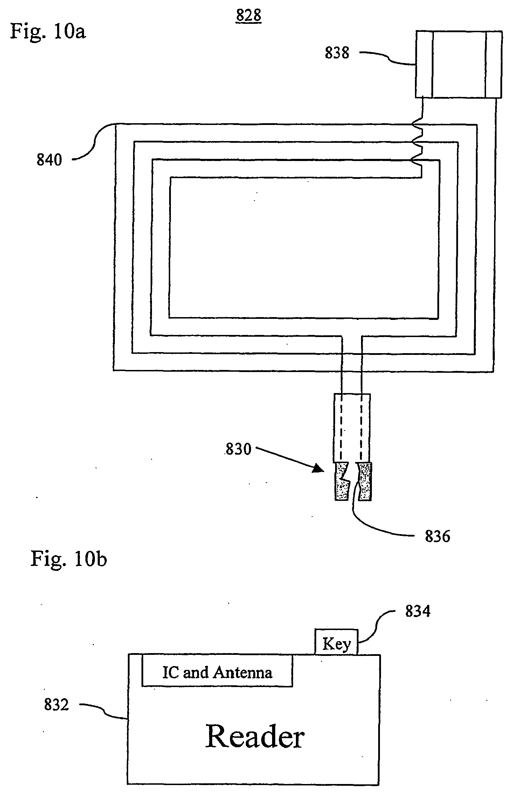

Reference is now made to Figs. 10a and 10b. Fig. 10a is a schematic view of a smart identification module **828** having a key operated switching arrangement **830** for use with the smart passport. Fig. 10b is a schematic view of a passport reader **832** for use with smart identification module **828** of Fig. 10a. Smart identification module **828** includes a chip module **838** and an antenna **840.** Key operated switching arrangement **830** is disposed in antenna **840.** Key operated switching arrangement **830** is configured for breaking the continuity of antenna **840** thereby preventing antenna **840** from transmitting or receiving data. Key operated switching arrangement **830** is configured for actuation by an external key. The term "external key" is defined herein as a physical key which is not permanently mechanically connected to key operated switching arrangement **830.** Passport reader **832** includes a protrusion **834** for actuating key operated switching arrangement **830** so as to close the antenna loop thereby enabling antenna **840** to transmit and receive data. Protrusion **834** is preferably a key, which is shaped for insertion into a receiving opening **836** of key operated switching arrangement **830.** Protrusion **834** typically includes an electrically conducting layer which closes the loop of antenna **840.** Therefore, the smart passport is only readable when an appropriate key is inserted into key operated switching arrangement **830.** It will be appreciated by those ordinarily skilled in the art that instead of using protrusion **834,** key operated switching arrangement **830** can be operated using a hand-held key which is operated by a human operator, for example, but not limited to a border control officer.

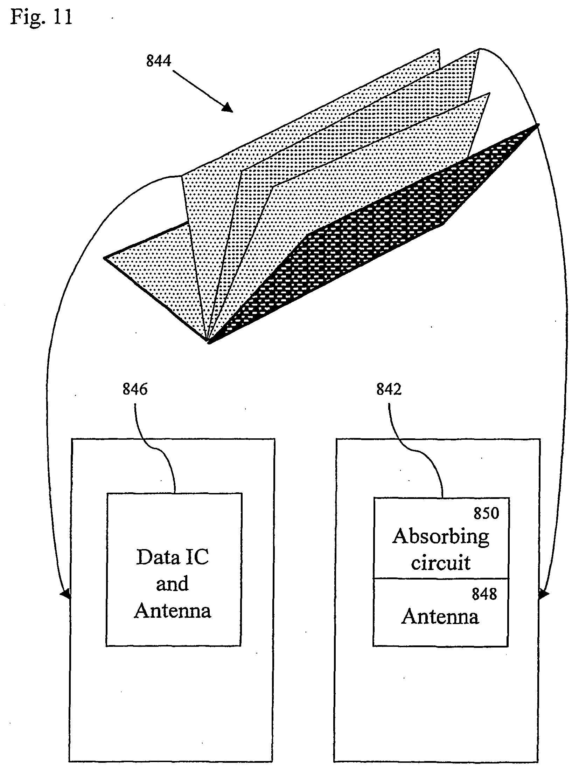

Reference is now made to Fig. 11, which is a schematic view of an electronic absorbing element **842** for use with the smart passport. Electronic absorbing element **842** is typically disposed in a page of a smart passport **844** adjacent to a smart identification module **846.** Electronic absorbing element **842** is an anti-skimming element which is configured for obstructing propagation of electromagnetic waves between smart identification module **846** and any external reader when smart passport **844** is closed, as will be described in more detail below. When smart passport **844** is open and smart identification module **846** is placed close to the passport reader (smart identification module **846** no longer being adjacent to electronic absorbing element **842),** the obstructing effect of electronic absorbing element **842** is considerably reduced and does not affect communication between smart identification module **846** and a passport reader. Electronic absorbing element **842** includes an antenna **848** electrically connected to a circuit **850.** Antenna **848** receives electromagnetic radiation transmitted by smart identification module **846** or by any external reader. Circuit **850** is a self-tuning resonating circuit or adaptive absorbing circuit. Circuit **850** self tunes to the frequency of the received electromagnetic radiation and resonates, thereby acting as an efficient energy absorber of the electromagnetic radiation. Therefore, circuit **850** obstructs propagation of electromagnetic waves between smart identification module **846** and any external reader when smart passport **844** is closed. Those skilled in the art of electrical engineering know how to construct a suitable self-tuning resonating circuit. It will be appreciated by those ordinarily skilled in the art that electronic absorbing element **842** can be disposed in a holder (not shown) of smart passport **844.** It will be appreciated by those ordinarily skilled in the art that an electronic absorbing element having a natural frequency which is not the same as the frequency of communication of smart identification module **846** can still have a significant absorbing effect and therefore be used to form an effective electronic absorbing element **842.**

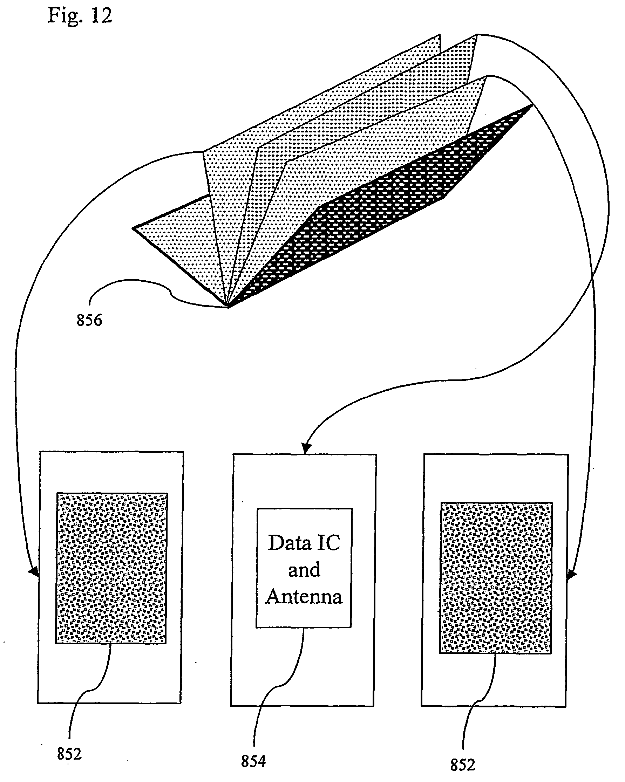

Reference is now made to Fig. 12, which is a schematic view of a magnetic absorbing element **852** for use with the smart passport. Magnetic absorbing element **852** operates in a similar manner to electronic absorbing element **842** of Fig. 11. Magnetic absorbing element **852** is typically disposed in two pages of a smart passport **856** sandwiching smart identification module **854** between the two pages including magnetic absorbing element **852.** However, it will be appreciated by those ordinarily skilled in the art that magnetic absorbing element **852** can be disposed on a single page of smart passport **856.** Magnetic absorbing element **852** includes a magnetic material, typically ferrite dust, which has a natural frequency as close as possible to the communicating frequency of smart identification module **854.** Therefore, magnetic absorbing element **852** resonates when electromagnetic radiation has the same frequency as the natural frequency of magnetic absorbing element **852** is incident on magnetic absorbing element **852.** Therefore, magnetic absorbing element **852** absorbs incident radiation having a frequency substantially the same as the communicating frequency of smart identification module **854** thereby preventing smart identification module **854** transmitting or receiving data when magnetic absorbing element **852** is adjacent to smart identification module **854.** However, when smart passport **856** is open and smart identification module **854** is placed close to the passport reader (smart identification module **854** no longer being adjacent to magnetic absorbing element **852),** the obstructing effect of magnetic absorbing element **852** is considerably reduced and does not affect communication between smart identification module **854** and a passport reader. Magnetic absorbing element **852** is typically formed as a foil, printed region, lacquer or self-adhesive magnetic strip, which is be easily attached to smart passport **856** or a passport holder. It will be appreciated by those ordinarily skilled in the art that there are many options for forming magnetic absorbing element 852. It will be appreciated by those ordinarily skilled in the art that a magnetic absorbing element having a natural frequency which is not the same as the frequency of communication of smart identification module **854** can still have a significant absorbing effect and therefore be used to form an effective magnetic absorbing element **852.**

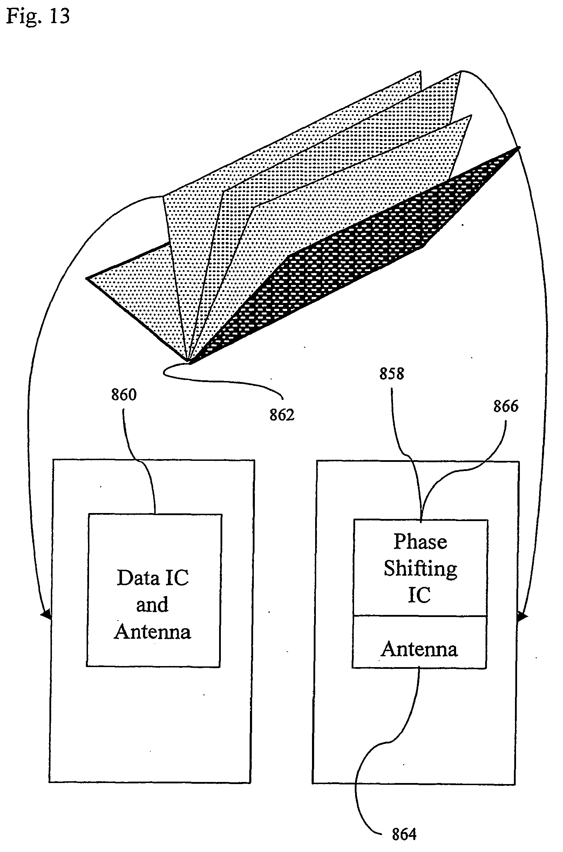

Reference is now made to Fig. 13, which is a schematic view of a phase shifting electronic element **858** for use with the smart passport. Phase shifting electronic element **858** is an anti-skimming element configured for transmitting a signal which is out-of-phase with electromagnetic waves transmitted or received by a smart identification module **860** of a smart passport **862.** Therefore, phase shifting electronic element **858** generates noise and/or generates interference with the electromagnetic waves transmitted or received by smart identification module **860.** Phase shifting electronic element **858** includes an antenna **864** and a circuit **866.** Antenna **864** receives the electromagnetic radiation. Circuit **866** typically shifts the phase of the received signal by 180 degrees. However, it will be appreciated by those ordinarily skilled in the art that other phase-shifts will create interference or noise and therefore obstruct communication between smart identification module **860** and an external reader. Antenna **864** retransmits the signal thereby interfering with the original transmission to and from smart identification module **860.** This concept is known in the use of radar blocking systems. It is known by one ordinarily skilled in the art how to construct a suitable phase-shifting circuit. When smart passport **862** is open and smart identification module **860** is placed close to the passport reader, the effect of phase shifting electronic element **858** is considerably reduced and does not affect communication between smart identification module **860** and the passport reader.

Fig. 14 is a schematic view of a passport information processing system **868.** Passport information processing system **868** is configured for processing information of a smart passport. Passport information processing system **868** includes a passport reader **870** and a processing terminal **872.** Passport reader **870** and processing terminal **872** are operationally linked via a communication link **874.** Passport reader **870** is configured for contactlessly reading the information from the smart passport. Passport reader **870** includes an encoder/decoder **876** having a security authorization module (SAM) card slot **878** for receiving a security authorization module (SAM) card **880.** The use of SAM cards is known in the art of data terminal security. Encoder/decoder **876** is configured for generating encoded data from the information read from the smart passport as well as decoding commands and other data received from processing terminal **872.** The term "encoding" is defined herein to include encrypting. The term "decoding" is defined herein to include "decrypting". Various encoding and encryption techniques are known to those skilled in the art of encryption. Passport reader **870** is configured for sending encoded data to processing terminal **872** via communication link **874.** Passport reader **870** is also configured for receiving encoded data from processing terminal **872.** Processing terminal **872** also includes an encoder/decoder **882** for encoding commands and other data for sending to passport reader **870** as well as decoding information received from passport reader **870.** Therefore, all data transmitted between processing terminal **872** and passport reader **870** is encoded. The term "transmitted between" is defined herein to include transmitting data from each device to the other device. Processing terminal **872** is configured for processing the decoded data, for example, but not limited to validation and verification of the passport information against a database of passport details. Encoder/decoder **882** includes a security authorization module (SAM) card slot **884** for receiving a security authorization module (SAM) card **886.** Encoder/decoder **882** has a random dynamically changing encryption key, which typically changes every 10 seconds in order to prevent identifying the key by an unauthorized reader.

Reference is now made to Figs. 15a to 15c. Fig. 15a is a schematic isometric view of a passport reader **888.** Fig. 15b is a plan view of passport reader **888** of Fig. 15a. Fig. 15c is a cross-sectional view along line A-A of Fig. 15b. By way of introduction, the anti-skimming elements described above with reference to Figs. 6 to 13 protect the smart passport when closed. However, it is also important to prevent skimming by an unauthorized reader when the passport is open during reading by an authorized passport reader. Passport reader **888** is configured for reading information from a smart passport. Passport reader **888** has a housing **890** and a contactless reading element **892.** Reading element **892** is configured for contactlessly reading the information from the smart identification module of the smart passport. Reading element **892** is disposed in housing **890.** Housing **890** has an opening **894** therein for inserting the smart identification module of the smart passport into housing **890** for reading by reading element **892.** Housing **890** is configured as a faraday cage thereby preventing unauthorized theft of the information stored in the smart identification module while the passport is open.

## Claims

1. A smart electronic personal identification document, comprising :
an inner page,
a smart identification module (810) including a contactless chip module and an antenna,
said smart identification module being operative to store and exchange personal identification information contactlessly with an external reader;
**characterized in that**
it further comprises an anti-skimming element disposed adjacent to said smart identification module,
said anti-skimming element being configured for preventing unauthorized theft of said information,
wherein said anti-skimming element includes a switching arrangement (812) electrically connected to said smart identification module (810),
said switching arrangement (812) is configured for selectively enabling and disabling transmission of said information by said smart identification module (810),
said switching arrangement includes a light sensor (814), disposed on the inner page of said smart electronic personal identification document,
and said light sensor is configured such that, when said personal identification document is opened to said page, and said_light sensor is exposed to light above a threshold light level, said switching arrangement enables transmission of said information by said smart identification module.

2. The document of claim 1, wherein said chip module has a power supply voltage input pin and an output enable pin, said light sensor being electrically connected to said power supply voltage input pin and said output enable pin so that light incident on said light sensor selectively enables and disables the output of said chip module.

3. The document of claim 1 or claim 2 wherein the light sensor is a non-visible light sensor.

4. The document of claim 1 or claim 3 wherein the light sensor is a sensor of a discrete frequency of radiation.

## Patentansprüche

1. Intelligentes elektronisches persönliches Identifikationsdokument, das Folgendes aufweist:
eine Innenseite,
ein intelligentes Identifikationsmodul (810), das ein kontaktloses Chipmodul und eine Antenne einschließt,
wobei das intelligente Identifikationsmodul dazu betriebsbereit ist, persönliche Identifikationsinformationen zu speichern und kontaktlos mit einem externen Lesegerät auszutauschen;
**dadurch gekennzeichnet, dass**
es ferner ein Anti-Skimming-Element aufweist, das angrenzend an das intelligente Identifikationsmodul angeordnet ist,
wobei das Anti-Skimming-Element dazu ausgestaltet ist, unberechtigten Diebstahl der Informationen zu verhindern,
wobei das Anti-Skimming-Element eine Schaltungsanordnung (812) einschließt, die elektrisch mit dem intelligenten Identifikationsmodul (810) verbunden ist, wobei die Schaltungsanordnung (812) zum selektiven Aktivieren und Deaktivieren einer Übertragung der Informationen durch das intelligente Identifikationsmodul (810) ausgestaltet ist,
wobei die Schaltungsanordnung einen Lichtsensor (814) einschließt, der auf der Innenseite des intelligenten elektronischen persönlichen Identifikationsdokuments angeordnet ist,
und wobei der Lichtsensor so ausgestaltet ist, dass, wenn das persönliche Identifikationsdokument auf dieser Seite geöffnet wird und der Lichtsensor mit Licht über einem Schwellen-Lichtwert beaufschlagt wird, die Schaltungsanordnung eine Übertragung der Informationen durch das intelligente Identifikationsmodul aktiviert.

2. Dokument nach Anspruch 1, wobei das Chipmodul einen Stromversorgungs-Spannungseingangsstift und einen Ausgangsaktivierungsstift aufweist, wobei der Lichtsensor elektrisch mit dem Stromversorgungs-Spannungseingangsstift und dem Ausgangsaktivierungsstift verbunden ist, so dass auf den Lichtsensor einfallendes Licht selektiv den Ausgang des Chipmoduls aktiviert und deaktiviert.

3. Dokument nach Anspruch 1 oder Anspruch 2, wobei der Lichtsensor ein nichtsichtbarer Lichtsensor ist.

4. Dokument nach Anspruch 1 oder Anspruch 3, wobei der Lichtsensor ein Sensor einer diskreten Strahlungsfrequenz ist.

## Revendications

1. Pièce d'identité personnelle électronique à puce, comprenant :
une page intérieure,
un module d'identification à puce (810) comprenant un module de puce sans contact et une antenne,
ledit module d'identification à puce étant opérationnel pour stocker et échanger des informations d'identification personnelles sans contact avec un lecteur externe ;
**caractérisée en ce qu'**elle comporte en outre un élément anti-fraude disposé adjacent audit module d'identification à puce,
ledit élément anti-fraude étant configuré pour empêcher un vol non autorisé desdites informations,
dans lequel ledit élément anti-fraude comprend un agencement de commutation (812) relié électriquement audit module d'identification à puce (110),
ledit agencement de commutation (812) est configuré pour valider et invalider sélectivement une transmission desdites informations par ledit module d'identification à puce (810),
ledit agencement de commutation comprend un capteur de lumière (814), disposé sur la page intérieure de ladite pièce d'identité personnelle électronique à puce,
et ledit capteur de lumière est configuré de telle sorte que lorsque la pièce d'identité personnelle est ouverte à ladite page, et ledit capteur de lumière est exposé à une lumière au-dessus d'un niveau de lumière de seuil, ledit agencement de commutation valide une transmissions desdites informations par l'intermédiaire dudit module d'identification à puce.

2. Document selon la revendication 1, dans lequel ledit module à puce à une broche d'entrée de tension d'alimentation électrique et une broche de validation de sortie, ledit capteur de lumière étant relié électriquement à la broche d'entrée de tension d'alimentation électrique et à la broche de validation de sortie, de sorte que de la lumière incidente sur ledit capteur de lumière valide et invalide sélectivement la sortie dudit module à puce.

3. Document selon la revendication 1 ou 2, dans lequel le capteur de lumière est un capteur de lumière invisible.

4. Document selon la revendication 1 ou 3, dans lequel le capteur de lumière est un capteur ayant une fréquence de rayonnement discrète.
